# DEMANDE DE BREVET EUROPEEN

(11) **EP 1 638 039 A1**
(43) Date de publication de la demande: **22.03.2006**
(21) Numéro de dépôt: 05291919.8
(22) Date de dépôt: 16.09.2005
(51) Int. Cl.: G06K 9/46, G06T 5/00, G08G 1/0962

(54) **Procédé et dispositif de vision de nuit sur route autorisant une lisibilité accrue des images**

(30) Priorité: 21.09.2004 FR 0409985
(71) Demandeur: VALEO VISION, 93012 Bobigny Cédex (FR)
(72) Inventeur: Lelève, Joël, 93300 Epinay sur Seine (FR); Herbin, Anne, 75004 Paris (FR)

(57) **Abrégé**

Le procédé selon l'invention comporte l'acquisition (E1) d'une image numérique initiale (IM) représentant une scène de route se déroulant devant le véhicule, le traitement de l'image initiale afin d'obtenir une image traitée (IAF) et l'affichage (E6) de l'image traitée. Le traitement effectué comprend l'extraction (E30, E31) d'au moins une portion d'image caractéristique présente dans l'image initiale et susceptible d'avoir une importance pour la sécurité de la conduite, l'obtention (E4), à partir de la portion d'image caractéristique, d'un élément visuel additionnel correspondant à la portion d'image caractéristique et ayant un contenu visuel qui est dérivé de celui de la portion d'image caractéristique extraite, le contenu de l'élément visuel additionnel étant déterminé de manière à présenter une lisibilité élevée, et l'incrustation (E5) dans l'image initiale de l'élément visuel additionnel correspondant, l'incrustation étant effectuée au niveau de la portion d'image caractéristique correspondante.

## Description

L'invention concerne de manière générale des procédé et dispositif d'aide à la vision de nuit sur route apte à être installé dans un système d'aide à la conduite embarqué dans des véhicules tels que des véhicules automobiles ou des véhicules poids lourds. Plus particulièrement, l'invention concerne des procédé et dispositif tels qu'indiqués ci-dessus dans lesquels des scènes de route sont prises par une caméra infrarouge.

De manière classique, dans un dispositif de vision de nuit infrarouge, une caméra infrarouge délivre des images infrarouge de scènes de route se déroulant devant le véhicule. Les images infrarouge fournies par la caméra sont ensuite traitées dans une unité de traitement d'image de telle manière à obtenir des images traitées en noir et blanc aussi proche que possible de celles que le conducteur verrait en plein jour. Les images traitées sont présentées au conducteur sur un écran d'affichage qui est installé, par exemple, sur le tableau de bord du véhicule.

Dans les dispositifs connus, tels que décrits ci-dessus, la quantité élevée des détails dans l'image noir et blanc, associée à la taille réduite de l'écran, impose au conducteur un temps de lecture élevé, parfois à la limite des conditions de sécurité. Cette lecture attentive fatigue les yeux et va à l'encontre de l'amélioration de confort et de sécurité qui est la finalité première du dispositif de vision de nuit.

Par ailleurs, il est connu de l'inventeur un système d'aide à la conduite embarqué dans un véhicule dans lequel l'attention du conducteur est attirée sur des obstacles présents sur la route ou sur une zone de distance de sécurité avec un véhicule précédent.

Dans ce système de la technique antérieure, des formes géométriques simples, telles que des rectangles et des parallélogrammes, sont intégrées autour d'obstacles dans l'image affichée, ou pour délimiter une zone de distance de sécurité. Cependant, ce système de la technique antérieure ne comporte aucune fonctionnalité de vision de nuit et se limite à une aide à la conduite avec une capacité d'analyse qui reste limitée à une distance d'environ 40 mètres. De plus, du fait de son orientation du type « sécurité active », ce système met en oeuvre des traitements d'images complexes et lourds, en rapport avec le niveau de confiance requis, et implique une utilisation de processeurs de calcul coûteux.

L'invention vise à remédier aux inconvénients des techniques antérieures exposées ci-dessus en fournissant des procédé et dispositif du type susmentionné dans lesquels les images de scène de route, ou images de route, sont traitées de manière à en améliorer la lisibilité, et cela au moyen de traitements d'image de complexité réduite et bien maîtrisés.

Selon un premier aspect, la présente invention fournit donc un procédé d'aide à la vision de nuit sur route, apte à être mis en oeuvre dans un système d'aide à la conduite embarqué dans un véhicule, comportant une étape d'acquisition d'une image numérique initiale représentant une scène de route se déroulant devant ledit véhicule, une étape de traitement de ladite image numérique initiale afin d'obtenir une image numérique traitée et une étape d'affichage sur écran de ladite image numérique traitée. Conformément à l'invention, ladite étape de traitement comprend les sous-étapes de :
- extraction d'au moins une portion d'image caractéristique présente dans ladite image numérique initiale et susceptible d'avoir une importance pour la sécurité de la conduite ;
- obtention, à partir de ladite portion d'image caractéristique, d'un élément visuel additionnel correspondant à ladite portion d'image caractéristique et ayant un contenu visuel qui est dérivé de celui de ladite portion d'image caractéristique extraite, ledit contenu visuel dudit élément visuel additionnel étant déterminé de manière à présenter une lisibilité élevée ; et
- incrustation dans ladite image numérique initiale dudit élément visuel additionnel correspondant, ladite incrustation étant effectuée au niveau de ladite portion d'image caractéristique.

Corrélativement, l'invention concerne également un dispositif d'aide à la vision de nuit sur route apte à être installé dans un système d'aide à la conduite embarqué dans un véhicule, comportant des moyens d'acquisition d'une image numérique initiale représentant une scène de route se déroulant devant ledit véhicule, des moyens de traitement de ladite image numérique initiale afin d'obtenir une image numérique traitée et des moyens d'affichage sur écran de ladite image numérique traitée. Conformément à l'invention,lesdits moyens de traitement comprennent :
- des moyens d'extraction d'au moins une portion d'image caractéristique présente dans ladite image numérique initiale et susceptible d'avoir une importance pour la sécurité de la conduite ;
- des moyens d'obtention, à partir de ladite portion d'image caractéristique, d'un élément visuel additionnel correspondant à ladite portion d'image caractéristique et ayant un contenu visuel qui est dérivé de celui de ladite portion d'image caractéristique extraite, ledit contenu visuel dudit élément visuel additionnel étant déterminé de manière à présenter une lisibilité élevée ; et
- des moyens d'incrustation dans ladite image numérique initiale dudit élément visuel additionnel correspondant, ladite incrustation étant effectuée au niveau de ladite portion d'image caractéristique.

Selon une caractéristique préférée de l'invention, l'acquisition de l'image numérique initiale comporte une acquisition d'une image numérique infrarouge.

Selon une autre caractéristique, l'extraction de portion d'image caractéristique comporte une extraction de ladite portion d'image caractéristique dans une fenêtre prédéterminée de ladite image numérique initiale, ladite fenêtre prédéterminée incluant au moins une partie de la chaussée de ladite route et des parties adjacentes à ladite chaussée. De préférence, ladite fenêtre couvre une distance de l'ordre de 150 à 200 mètres par rapport audit véhicule.

Selon encore une autre caractéristique, l'extraction de portion d'image caractéristique comporte une extraction dans ladite fenêtre, en tant que dite portion d'image caractéristique, d'au moins une partie des bords de ladite route, ladite extraction faisant appel à un calcul d'un gradient de décroissance de la lumière pour au moins une partie des pixels de ladite image numérique initiale.

Selon un mode de fonctionnement particulier de l'invention, ladite extraction de portion d'image caractéristique comporte une extraction dans ladite fenêtre, en tant que dite portion d'image caractéristique, d'au moins une portion d'image présentant un niveau de contraste par rapport à ladite chaussée qui est supérieur à un seuil prédéterminé.

Selon encore une autre caractéristique de l'invention, l'obtention d'élément visuel additionnel comporte une obtention dudit élément visuel additionnel sous une forme épurée de ladite portion d'image caractéristique correspondante, ladite forme épurée comprenant au moins une portion de droite et/ou au moins une portion de courbe et/ou au moins un contour partiel ou complet de ladite portion d'image caractéristique correspondante.

L'invention concerne également un système d'aide à la conduite sur route embarqué dans un véhicule, un moyen de stockage d'information, et un programme d'ordinateur dont l'exécution autorise une mise en oeuvre du procédé selon l'invention.

D'autres aspects et avantages de la présente l'invention apparaîtront plus clairement à la lecture de la description de modes de réalisation particuliers qui va suivre, cette description étant donnée à titre d'exemple non limitatif et faite en référence aux dessins annexés, dans lesquels :
la Fig.1 montre la structure générale d'un mode de réalisation préféré du dispositif d'aide à la vision de nuit selon l'invention, dans lequel des sous-ensembles fonctionnels et des modules de traitement sont partagés avec un dispositif de détection de virage en conduite de nuit;
la Fig.2 montre une configuration matérielle d'une unité de traitement comprise dans un dispositif d'aide à la vision de nuit selon l'invention;
les Figs.3A, 3B et 3C représentent respectivement un exemple d'une image d'une route avec un virage à droite, une image des bords de route obtenue après une étape de traitement selon l'invention de l'image de la Fig3A et une image, telle qu'affichée à l'intention du conducteur, obtenue après une autre étape de traitement selon l'invention des images des Figs.3A et 3B;
les Figs.4A, 4B et 4C représentent respectivement un exemple d'une image d'une route droite, une image des bords de route obtenue après une étape de traitement selon l'invention de l'image de la Fig4A et une image, telle qu'affichée à l'intention du conducteur, obtenue après une autre étape de traitement selon l'invention des images des Figs.4A et 4B;
les Figs.5A et 5B représente respectivement une image naturelle, telle que vue par le conducteur, pour une route avec un virage à droite et une image correspondante, telle qu'affichée à l'intention du conducteur, comprenant des éléments visuels additionnels améliorant la lisibilité de l'image; et
la Fig.6 est un organigramme fonctionnel montrant de manière globale différentes étapes de traitement comprises dans le procédé d'aide à la vision de nuit selon l'invention.

L'invention est maintenant décrite essentiellement dans le cadre d'un mode de réalisation préféré d'un dispositif de type infrarouge selon l'invention dans lequel des sous-ensembles fonctionnels et des modules de traitement sont partagés avec un dispositif de détection de virage en conduite de nuit équipant également le véhicule.

Dans ce mode de réalisation préféré, le dispositif de détection de virage en conduite de nuit est du type de celui divulgué dans la demande de brevet français de la Demanderesse publiée sous le N° 2 848 935. Dans cette demande de brevet FR-A-2 848 935, il est divulgué des procédé et dispositif de détection de virage en conduite de nuit pour véhicule dans lesquels les bords de la route sont détectés dans une image de scène de route.

Dans un mode de réalisation particulier du dispositif selon FR-A-2 848 935, l'image de scène de route est celle prise par une caméra infrarouge d'un système de vision de nuit équipant le véhicule. Dans un tel dispositif, la détection des bords de la route autorise un calcul de l'angle des virages sur la route afin de pré-orienter un éclairage de la route par les projecteurs du véhicule.

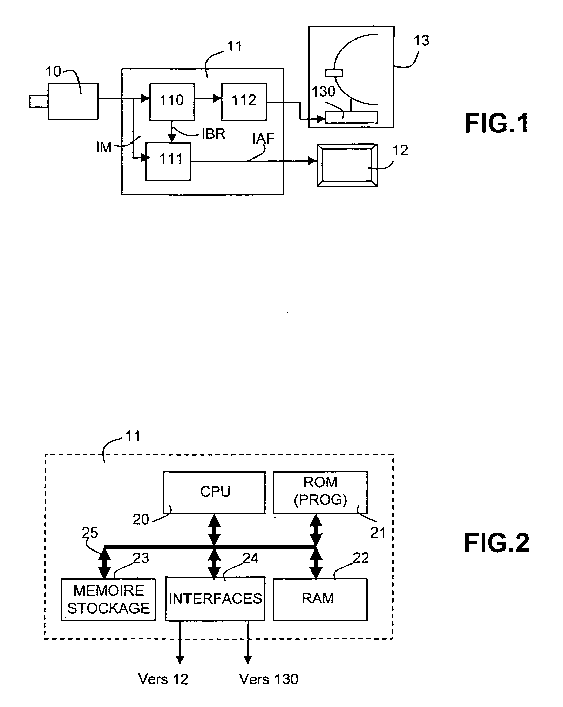

En référence à la Fig.1, le dispositif de vision de nuit infrarouge selon l'invention comprend essentiellement une caméra infrarouge 10, une unité de traitement 11 dans laquelle sont laquelle sont implantés des modules logiciels de traitement d'image 110 et 111, et un écran d'affichage 12.

La caméra 10 est installée dans le véhicule de telle manière à prendre des scènes de route successives, de préférence, telles que vues par le conducteur depuis l'avant du véhicule. La caméra 10 délivre des images numériques IM aux modules logiciels 110 et 111. Ces images numériques IM sont également désignées images de route IM par la suite.

Comme montré à la Fig.2, l'unité de traitement 11 est d'une architecture classique et comprend une unité centrale de traitement CPU 20 telle qu'un microprocesseur, une mémoire morte ROM ou EEPROM 21, une mémoire vive RAM 22, une mémoire de stockage 23 par exemple de type FLASH, des interfaces 24 et un bus de communication interne 25. Dans un autre mode de réalisation de l'invention, l'unité de traitement 11 est également équipée d'un moyen de communication homme-machine, tel qu'un clavier, à travers lequel le conducteur peut sélectionner différents modes de fonctionnement.

L'unité de traitement 11 exécute un ou plusieurs programmes PROG qui autorisent la mise en oeuvre du procédé selon l'invention.

Dans la configuration de la Fig.2, le code exécutable des programmes PROG est logé en partie ou en totalité dans la mémoire ROM 21.

Le code exécutable des programmes PROG peut aussi être chargé en partie dans la mémoire de stockage 23, via les interfaces 24, à partir par exemple d'une disquette introduite dans un lecteur de disquette ou à travers une liaison de communication reliée par exemple à un micro-ordinateur utilisé pour la configuration de l'unité de traitement 11.

Bien entendu, la disquette à partir de laquelle sont chargés les programmes PROG peut être remplacée par un disque compact CD-ROM ou une carte mémoire. De manière plus générale, tout moyen de stockage d'information lisible par un ordinateur ou un microprocesseur, intégré ou non dans l'unité de traitement 11, éventuellement amovible, est adapté à mémoriser, en partie ou en totalité, les programmes PROG.

L'unité centrale 20 commande l'exécution des instructions ou portions de code des programmes PROG, les instructions étant stockées dans la mémoire ROM 21 et/ou la mémoire de stockage 23 et/ou les autres moyens de stockage d'information indiqués ci-dessus.

Lors de la mise sous tension de l'unité de traitement 11, les programmes PROG stockés dans une mémoire non volatile, telle que la mémoire ROM 21 ou la mémoire de stockage 23, sont transférés en partie ou en totalité dans la mémoire volatile RAM 22 qui contiendra alors le code exécutable transféré des programmes PROG ainsi que différents registres pour mémoriser des variables et paramètres nécessaires à la mise en oeuvre du procédé selon l'invention.

On notera également que l'unité de traitement 11 peut prendre la forme d'un appareil programmé, Cet appareil programmé contient alors le code exécutable des programmes PROG sous une forme figé dans un circuit intégré à application spécifique (ASIC).

En référence de nouveau à la Fig.1, la caméra infrarouge 10 et le module logiciel de traitement d'image 110 implanté dans l'unité de traitement 11 sont des éléments fonctionnels qui sont partagés entre le dispositif de vision de nuit infrarouge selon l'invention et le dispositif de détection de virage en conduite de nuit.

Par contre, les éléments fonctionnels 112, 13 et 130 sont impliqués uniquement dans le dispositif de détection de virage en conduite de nuit du véhicule et n'apportent donc aucune contribution fonctionnelle sensible au dispositif de vision de nuit infrarouge selon l'invention. Ces éléments 112, 13 et 130 sont respectivement un logiciel de réseau de neurones implanté dans l'unité de traitement 11, un projecteur et un actionneur de correction d'angle de site équipant le projecteur. Leur description détaillée sort du cadre de la présente demande. Le lecteur à la recherche d'informations complémentaires sur ces éléments 112, 13 et 130 trouvera celles-ci en consultant la demande de brevet FR-A-2 848 935.

Conformément à l'invention, le module logiciel 110 effectue un premier traitement sur l'image numérique IM fournie par la caméra 10 de manière à obtenir une image IBR représentant les bords de la route. Le contraste existant entre le bitume de la chaussée et l'environnement adjacent à celle-ci est utilisé dans le module logiciel 110 pour déterminer les bords de route.

Plus précisément, la chaussée étant de couleur sombre, la lumière émise par les faisceaux lumineux du véhicule sur la chaussée a tendance à décroître au fur et à mesure que l'on s'éloigne de la source de lumière. Autrement dit, plus on est loin du véhicule et plus la lumière sur la chaussée est faible. Au contraire, sur les bords de route plus lumineux, la lumière émise par le véhicule a tendance à être réfléchie. Autrement dit, la lumière ne décroît pas lorsqu'on s'éloigne du véhicule. Il y a ainsi une inversion de contraste entre la lumière sur la chaussée et la lumière sur les bords de route. Cette inversion de contraste est utilisée, dans le traitement effectué par le module logiciel 110, pour déterminer une image de bords de route.

Ainsi, dans le module logiciel 110, il est effectué un traitement qui consiste à déterminer, pour chaque surface élémentaire de l'image numérique IM, le gradient de lumière. Pour cela, le traitement effectué analyse le niveau de lumière de chaque pixel (ou groupes de pixels) de l'image ainsi que le niveau de lumière du pixel (ou groupes de pixels) voisin du ou des pixels considéré(s). En considérant par exemple deux pixels voisins l'un de l'autre, on peut donc déterminer celui des deux pixels qui reçoit le plus de lumière et déterminer ainsi dans quel sens varie la lumière. On attribue alors à chaque pixel de l'image numérique IM un vecteur d'évolution de la lumière ou gradient de lumière. Lorsque tous les vecteurs de tous les pixels de l'image numérique IM ont été déterminés, on analyse les vecteurs afin de chercher, parmi tous ces vecteurs, ceux qui sont orientés en direction du véhicule, c'est-à-dire en direction de la source d'émission du faisceau lumineux du véhicule et, au contraire, ceux qui sont orientés dans la direction inverse, c'est-à-dire vers l'extérieur de la route. On sélectionne ensuite les vecteurs correspondant à une valeur et avec une tolérance prédéterminée, cette valeur étant appelée vecteur seuil. Les vecteurs différents de ce vecteur seuil ne sont pas pris en considération pour la suite du traitement. Au contraire, les vecteurs correspondant à ce vecteur seuil sont conservés pour la suite du traitement.

Le vecteur seuil est prédéfini. Il peut être choisi comme une valeur de référence par rapport à l'horizontale. Il forme alors un angle de référence par rapport à l'horizontale.

Le vecteur de seuil peut aussi être choisi en fonction du pixel de plus fort gradient, c'est-à-dire du pixel dont le vecteur est le plus orienté vers le véhicule. Le vecteur seuil forme alors un angle de référence par rapport au pixel de plus fort gradient.

Le module logiciel 110 construit ensuite l'image de bords de route IBR en utilisant les informations issues de l'analyse des gradients des pixels. Cette image de bords de route IBR est déterminée en conservant l'information fournie par tous les pixels (ou groupes de pixels) dont le vecteur est comparable au vecteur seuil. Plus précisément, dans l'image de bords de route IBR, la valeur de ces pixels, c'est-à-dire leur niveau de gris, est reproduit à l'identique. Par contre, tous les pixels dont le vecteur est différent du vecteur seuil ne sont pas reproduits et sont donc remplacés, sur l'image de bords de route IBR, par des pixels noirs.

Pour de plus amples détails sur le traitement effectué par le module logiciel 110, on se reportera utilement à la demande de brevet FR-A-2 848 935.

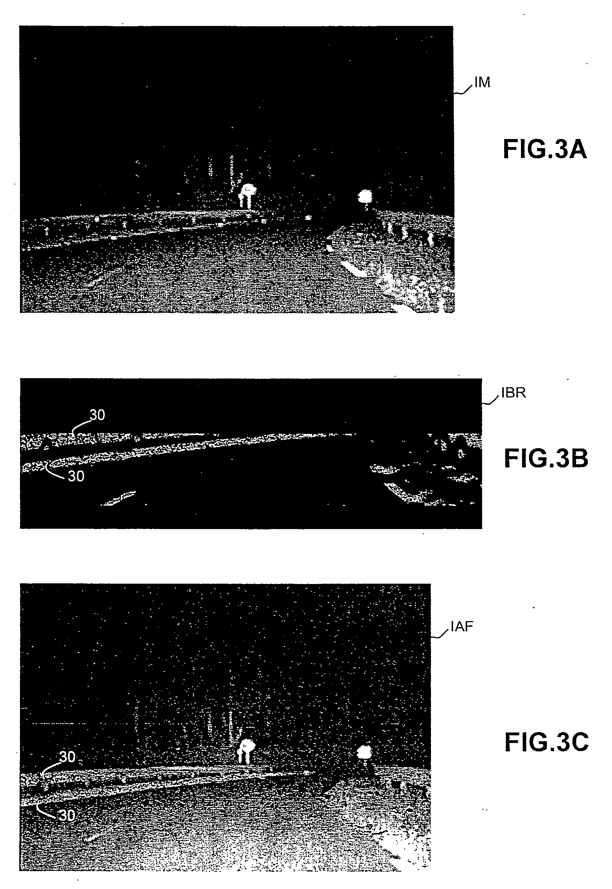

Un exemple d'image de bords de route IBR fournie par le module logiciel 110 est montré à la Fig.3B pour une route avec un virage à droite. L'image de bords de route de la Figs.3B est celle obtenue par traitement de l'image de route IM, montrée à la Fig.3A, telle que vue par la caméra 10.

Conformément à l'invention, l'image de bords de route IBR est fournie au module logiciel de traitement d'image 111.

Le module logiciel 111 autorise de préférence différents modes de fonctionnement auxquels correspondent respectivement différents traitements d'image effectués par le module.

Selon un premier mode de fonctionnement correspondant aux images montrées aux Figs.3A à 3C, le module logiciel 111 récupère dans l'image de bords de route IBR des parties d'image représentant les bords de la route et incruste celles-ci dans l'image de route IM fournie par la caméra 10. Le module logiciel 111 produit ainsi une image traitée IAF qui est affichée sur l'écran 12 et qui incorpore des éléments visuels additionnels sous la forme des parties d'image incrustées représentant les bords de la route. Ces parties d'images incrustées accentuent la perception par le conducteur des bords de la route, améliorant ainsi la lisibilité de l'image présentée au conducteur.

Un exemple d'image IAF obtenue avec ce premier mode de fonctionnement est montré à la Fig.3C pour les images de route et de bords de route des Figs.3A et 3B. Dans les Figs.3B et 3C, les parties d'image représentant les bords de route sont indiquées par le repère 30.

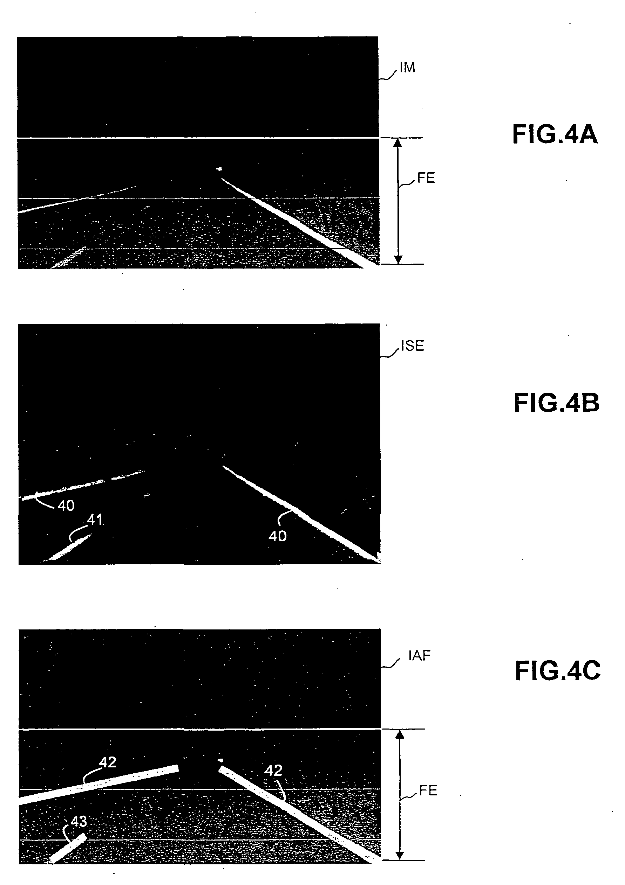

Selon un second mode de fonctionnement correspondant aux images montrées aux Figs.4A à 4C, en complément du traitement effectué par le module logiciel 110, le module logiciel 111 traite également l'image IM délivrée par la caméra 10 par une opération de comparaison à un seuil, afin d'obtenir une image ISE dans laquelle sont accentuées des parties à contraste élevé présentes sur la chaussée et des parties adjacentes à celle-ci. Plus précisément, les pixels de l'image IM correspondant à une fenêtre d'analyse prédéterminée FE sont comparés à une valeur de seuil, de telle manière à accentuer dans la portion de l'image correspondant à la chaussée et aux parties adjacentes, les pixels des parties présentant un contraste élevé par rapport au revêtement de la route. Ces parties à contraste élevé sont typiquement les bords de route, les lignes blanches de signalisation peintes sur la route, une déformation de la chaussée telle qu'un nid de poule, un obstacle éventuel présent sur la route et autres analogues.

Dans ce mode de réalisation préféré, la fenêtre d'analyse FE est prédéterminée de telle manière à couvrir une distance d'analyse de l'ordre de 150 à 200 mètres par rapport au véhicule. Bien entendu, l'homme du métier adaptera cette fenêtre FE en fonction de l'application particulière envisagée de la présente invention.

Un exemple d'image ISE est représenté à la Fig.4B pour une image de route IM rectiligne montrée à la Fig.4A. Dans l'image ISE de la Fig.4B, des parties claires 40 de l'image correspondent à des lignes blanches latérales continues délimitant les bords de la route. D'autres parties claires 41 correspondent à une ligne blanche discontinue au centre de la route.

A partir de l'image ISE, le module logiciel 111 détermine une représentation simplifiée des parties à contraste élevé sous la forme de portions de droite ou de courbe pour les bords de route ou les lignes blanches, et sous la forme de contours pour les parties à contraste élevé avec une géométrie plus complexe. Ces représentations simplifiées déterminées par le module logiciel 111 constituent ici les éléments visuels additionnels qui sont ensuite incrustés par le module logiciel 111 dans l'image IM, de manière à obtenir l'image IAF à afficher sur l'écran 12.

Dans l'exemple des Figs.4A, 4B et 4C, l'image IAF montrée à la Fig.4C comprend des éléments visuels additionnels 42 et 43 sous la forme de portions de droite correspondant aux bords de route 40 et à la ligne blanche centrale discontinue 41, respectivement.

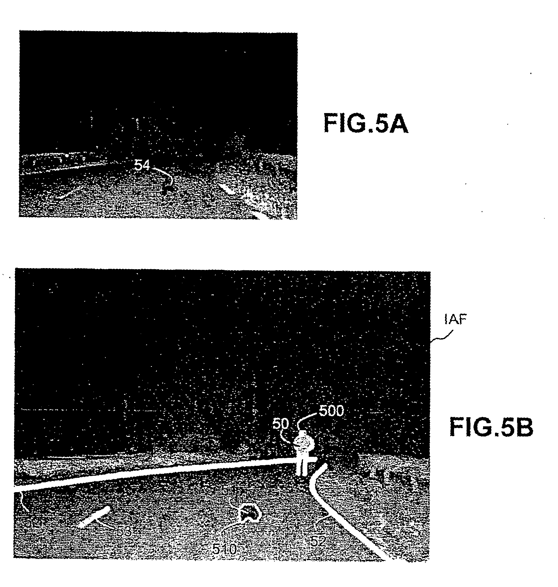

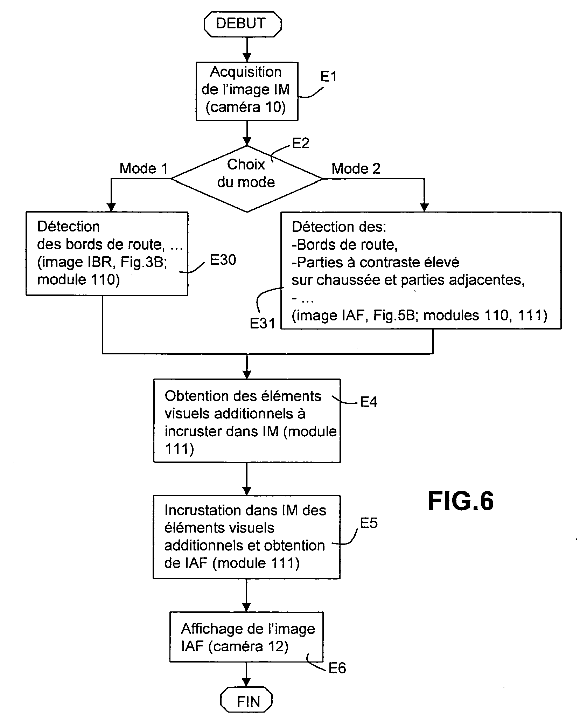

La Fig.5B montre un autre exemple d'image IAF affichée sur l'écran 12 pour une route avec un virage à droite. L'image IAF de la Fig.5B montre, en premier plan, une déformation 51 de la chaussée, par exemple, un nid de poule, et en second plan, un piéton 50 engagé sur la chaussée.

L'image de la Fig.5A, correspondant à celle de la Fig.5B, est dans cet exemple une image naturelle de la route. Par les termes « image naturelle de la route » on comprendra ici l'image de la route telle qu'elle apparaît au conducteur du véhicule. Dans l'image de la Fig.5A, le piéton 50 apparaissant dans l'image infrarouge IAF n'est pas visible, celui-ci se trouvant hors de portée des projecteurs d'éclairage du véhicule infrarouge. Par contre, une tâche foncée 54 apparaît sur l'image de la Fig.5A et correspond à la déformation 51 de la Fig.5B.

Conformément à l'invention, l'image IAF de la Fig.5B comporte des éléments visuels additionnels 500, 510, 52 et 53 qui sont incrustés afin d'améliorer sa lisibilité. Ces éléments visuels additionnels 500, 510, 52 et 53 correspondent respectivement à un contour blanc incrusté autour du piéton 50, un contour blanc incrusté autour de la déformation 51, des portions de ligne blanche incrustées au niveau des bords de route et une portion de ligne blanche incrustée au centre de la route.

De préférence, la couleur des éléments visuels additionnels incrustés dans l'image, conformément à la présente invention, sera choisie de manière à attirer l'attention du conducteur sur ces éléments. Dans certains modes de réalisation particuliers de l'invention, ces éléments visuels additionnels sont par exemple de couleur rouge ou blanche. Dans d'autres modes de réalisation, la couleur ou les niveaux de gris des éléments visuels additionnels sont choisis automatiquement par le module logiciel 111 de manière à offrir un contraste suffisant par rapport à des parties adjacentes dans l'image ou par rapport à un fond de l'image.

L'organigramme fonctionnel de la Fig.6, représente de manière globale les différentes étapes du procédé selon l'invention telles qu'elles viennent d'être décrites ci-dessus, de manière non limitative, en référence essentiellement aux images des Figs.3A à 3C, 4A à 4C et 5A et 5B.

L'organigramme de la Fig.6 montre une étape E1 correspondant à l'acquisition par la caméra 10 d'une image infrarouge numérique IM, une étape E2 correspondant au choix du premier mode de fonctionnement décrit ci-dessus en référence aux Figs.3A à 3C ou du second mode de fonctionnement décrits en référence aux Figs.4A à 4C et 5A, 5B, des étapes de traitement d'image E30, E31, E4 et E5 exécutées par l'unité de traitement 11, et une étape E6 correspondant à l'affichage par l'écran 12 de l'image IAF comprenant les éléments visuels additionnels.

Conformément à l'invention, le choix du mode de fonctionnement à l'étape E2 est de préférence effectué de manière automatique par l'unité de traitement 11, par exemple sur la base de descripteurs calculés, représentatifs de la lisibilité des images IM. Cependant, le choix du mode de fonctionnement à l'étape E2 pourra également être effectué manuellement par le conducteur du véhicule.

L'étape de traitement d'image E30 correspond à la détection des bords de route effectuée dans le premier mode de fonctionnement par le module logiciel 110. Cette étape E30 est décrite ci-dessus en référence essentiellement aux Figs.3A à 3C.

L'étape de traitement d'image E31 correspond aussi, outre le traitement effectué à l'étape E30, la détection par seuil des parties à contraste élevé sur la chaussée et les parties adjacentes à celles-ci, cette détection étant effectuée par le module logiciel 111. Cette étape E31 est décrite ci-dessus en référence essentiellement à la Fig.4B.

L'étape de traitement d'image E4 correspond à la détermination des éléments visuels additionnels à incruster dans l'image IM afin d'obtenir l'image à afficher IAF. Cette étape E4 est décrite ci-dessus en référence essentiellement aux Figs.3B, 4B, 4C et 5B.

Bien entendu, la présente invention ne se limite pas aux détails des modes de réalisation décrits ici à titre d'exemple, mais s'étend au contraire aux modifications à la portée de l'homme du métier sans sortir du cadre de l'invention. Ainsi, par exemple, tout en restant dans le cadre de l'invention, l'homme du métier pourra utiliser une caméra infrarouge de type FAR INFRARED ou d'autres capteurs d'image adaptés à une application particulière de l'invention.

## Revendications

1. Procédé d'aide à la vision de nuit sur route apte à être mis en oeuvre dans un système d'aide à la conduite embarqué dans un véhicule, comportant une étape d'acquisition (E1) d'une image numérique initiale (IM) représentant une scène de route se déroulant devant ledit véhicule, une étape de traitement de ladite image numérique initiale (IM) afin d'obtenir une image numérique traitée (IAF) et une étape d'affichage (E6) sur écran de ladite image numérique traitée (IAF), **caractérisé en ce que** ladite étape de traitement comprend les sous-étapes de :
- extraction (E30, E31) d'au moins une portion d'image caractéristique (30, 40, 41, 50, 51) présente dans ladite image numérique initiale (IM) et susceptible d'avoir une importance pour la sécurité de la conduite ;
- obtention (E4), à partir de ladite portion d'image caractéristique (30, 40, 41, 50, 51), d'un élément visuel additionnel (30, 42, 43, 52, 53, 500, 510) correspondant à ladite portion d'image caractéristique (30, 40, 41, 50, 51) et ayant un contenu visuel qui est dérivé de celui de ladite portion d'image caractéristique extraite (30, 40, 41, 50, 51), ledit contenu visuel dudit élément visuel additionnel (30, 42, 43, 52, 53, 500, 510) étant déterminé de manière à présenter une lisibilité élevée ; et
- incrustation (E5) dans ladite image numérique initiale (IM) dudit élément visuel additionnel correspondant (30, 42, 43, 52, 53, 500, 510), ladite incrustation étant effectuée au niveau de ladite portion d'image caractéristique (30, 40, 41, 50, 51).

2. Procédé selon la revendication 1, **caractérisé en ce que** ladite étape d'acquisition d'image numérique initiale (E1) comporte une acquisition d'une image numérique infrarouge (IM).

3. Procédé selon la revendication 1 ou 2, **caractérisé en ce que** ladite sous-étape d'extraction de portion d'image caractéristique (E30, E31) comporte une extraction de ladite portion d'image caractéristique (30, 40, 41, 50, 51) dans une fenêtre prédéterminée (FE) de ladite image numérique initiale (IM), ladite fenêtre prédéterminée (FE) incluant au moins une partie de la chaussée de ladite route et des parties adjacentes à ladite chaussée.

4. Procédé selon la revendication 3, **caractérisé en ce que** ladite fenêtre (FE) couvre une distance de l'ordre de 150 à 200 mètres par rapport audit véhicule.

5. Procédé selon la revendication 3 ou 4, **caractérisé en ce que** ladite sous-étape d'extraction de portion d'image caractéristique (E30, E31) comporte une extraction (E30) dans ladite fenêtre (FE), en tant que dite portion d'image caractéristique (30, 40, 41, 50, 51), d'au moins une partie des bords (30) de ladite route, ladite extraction faisant appel à un calcul d'un gradient de décroissance de la lumière pour au moins une partie des pixels de ladite image numérique initiale (IM).

6. Procédé selon l'une quelconque des revendications 2 à 5, **caractérisé en ce que** ladite sous-étape d'extraction de portion d'image caractéristique (E30, E31) comporte une extraction (E31) dans ladite fenêtre (FE), en tant que dite portion d'image caractéristique (30, 40, 41, 50, 51), d'au moins une portion d'image (40, 41, 50, 51) présentant un niveau de contraste par rapport à ladite chaussée qui est supérieur à un seuil prédéterminé.

7. Procédé selon l'une quelconque des revendications 1 à 6, **caractérisé en ce que** ladite sous-étape d'obtention d'élément visuel additionnel (E4) comporte une obtention dudit élément visuel additionnel (30, 42, 43, 52, 53, 500, 510) sous une forme épurée de ladite portion d'image caractéristique correspondante (30, 40, 41, 50, 51), ladite forme épurée comprenant au moins une portion de droite (42) et/ou au moins une portion de courbe (52) et/ou au moins un contour partiel ou complet (500, 510) de ladite portion d'image caractéristique correspondante (30, 40, 41, 50, 51).

8. Dispositif d'aide à la vision de nuit sur route apte à être installé dans un système d'aide à la conduite embarqué dans un véhicule, comportant des moyens d'acquisition (10) d'une image numérique initiale (IM) représentant une scène de route se déroulant devant ledit véhicule, des moyens de traitement de ladite image numérique initiale (IM) afin d'obtenir une image numérique traitée (IAF) et des moyens d'affichage sur écran (12) de ladite image numérique traitée (IAF), **caractérisé en ce que** lesdits moyens de traitement comprennent :
- des moyens (11, PROG, 110, 111) d'extraction d'au moins une portion d'image caractéristique (30, 40, 41, 50, 51) présente dans ladite image numérique initiale (IM) et susceptible d'avoir une importance pour la sécurité de la conduite ;
- des moyens (11, PROG, 110, 111) d'obtention, à partir de ladite portion d'image caractéristique (30, 40, 41, 50, 51), d'un élément visuel additionnel (30, 42, 43, 52, 53, 500, 510) correspondant à ladite portion d'image caractéristique (30, 40, 41, 50, 51) et ayant un contenu visuel qui est dérivé de celui de ladite portion d'image caractéristique extraite (30, 40, 41, 50, 51), ledit contenu visuel dudit élément visuel additionnel (30, 42, 43, 52, 53, 500, 510) étant déterminé de manière à présenter une lisibilité élevée ; et
- des moyens (11, PROG, 111) d'incrustation dans ladite image numérique initiale (IM) dudit élément visuel additionnel correspondant (30, 42, 43, 52, 53, 500, 510), ladite incrustation étant effectuée au niveau de ladite portion d'image caractéristique (30, 40, 41, 50, 51).

9. Dispositif selon la revendication 8, **caractérisé en ce que** lesdits moyens (11, PROG, 110, 111) d'extraction de portion d'image caractéristique (30, 40, 41, 50, 51) sont aptes à extraire ladite portion d'image caractéristique (30, 40, 41, 50, 51) dans une fenêtre prédéterminée (FE) de ladite image numérique initiale (IM), ladite fenêtre prédéterminée (FE) incluant au moins une partie de la chaussée de ladite route et des parties adjacentes à ladite chaussée.

10. Dispositif selon la revendication 9, **caractérisé en ce que** ladite fenêtre (FE) couvre une distance de l'ordre de 150 à 200 mètres par rapport audit véhicule.

11. Dispositif selon la revendication 9 ou 10, **caractérisé en ce que** lesdits moyens (11, PROG, 110, 111) d'extraction de portion d'image caractéristique sont aptes à extraire dans ladite fenêtre (FE), en tant que dite portion d'image caractéristique (30, 40, 41, 50, 51), au moins une partie des bords (30) de ladite route, ladite extraction faisant appel à un calcul d'un gradient de décroissance de la lumière pour au moins une partie des pixels de ladite image numérique initiale (IM).

12. Dispositif selon l'une quelconque des revendications 9 à 11, **caractérisé en ce que** lesdits moyens (11, PROG, 110, 111) d'extraction de portion d'image caractéristique sont aptes à extraire dans ladite fenêtre (FE), en tant que dite portion d'image caractéristique (30, 40, 41, 50, 51), au moins une portion d'image (40, 41, 50, 51) présentant un niveau de contraste par rapport à ladite chaussée qui est supérieur à un seuil prédéterminé.

13. Dispositif selon l'une quelconque des revendications 8 à 12, **caractérisé en ce que** lesdits moyens (11, PROG, 110, 111) d'obtention d'élément visuel additionnel sont aptes à obtenir ledit élément visuel additionnel (30, 42, 43, 52, 53, 500, 510) sous une forme épurée de ladite portion d'image caractéristique correspondante (30, 40, 41, 50, 51), ladite forme épurée comprenant au moins une portion de droite (42) et/ou au moins une portion de courbe (52) et/ou au moins un contour partiel ou complet (500, 510) de ladite portion d'image caractéristique correspondante (30,40,41,50,51).

14. Dispositif selon l'une quelconque des revendications 8 à 13, **caractérisé en ce que** lesdits moyens d'acquisition d'image numérique comprennent une caméra infrarouge (10).

15. Dispositif selon la revendication 14, **caractérisé en ce que** ladite caméra infrarouge (10) est partagée avec un dispositif de détection de virage en conduite de nuit équipant ledit véhicule.

16. Dispositif selon l'une quelconque des revendications 8 à 15, **caractérisé en ce qu'**il comprend une unité centrale de traitement (11) qui réalise les fonctions desdits moyens d'extraction de portion d'image caractéristique (11, PROG, 110, 111), desdits moyens d'obtention d'élément visuel additionnel (11, PROG, 110, 111), et desdits moyens d'incrustation d'élément visuel additionnel (11, PROG, 111).

17. Dispositif selon la revendication 16, **caractérisé en ce que** ladite unité centrale de traitement (11) est partagée avec un dispositif de détection de virage en conduite de nuit équipant ledit véhicule.

18. Système d'aide à la conduite sur route embarqué dans un véhicule, **caractérisé en ce qu'**il comprend un dispositif d'aide à la vision de nuit selon l'une quelconque des revendications 8 à 17.

19. Moyen de stockage d'information, **caractérisé en ce qu'**il mémorise un ou plusieurs programmes (PROG) dont l'exécution autorise une mise en oeuvre du procédé selon l'une quelconque des revendications 1 à 7, et **en ce qu'**il comprend une mémoire volatile et/ou une mémoire non-volatile et/ou un disque dur et/ou une disquette et/ou un CD-ROM.

20. Programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé selon l'une quelconque des revendications 1 à 7.
